# FASCICULE DE BREVET EUROPEEN

(11) **EP 0 333 581 B1**
(45) Date de publication et mention de la délivrance du brevet: **19.01.1994**
(21) Numéro de dépôt: 89400703.8
(22) Date de dépôt: 14.03.1989
(51) Int. Cl.: H04B 3/23, H04M 9/08

(54) **Dispositif annuleur d'écho à filtrage en sous-bandes de fréquence**
Einrichtung zur Echokompensation mit Filterung in Frequenzteilbändern
Echo cancelling device with filtration into frequency sub-bands

(30) Priorité: 15.03.1988 FR 8803341
(43) Date de publication de la demande: 20.09.1989
(73) Titulaire: FRANCE TELECOM, 75015 Paris (FR)
(72) Inventeur: Gilloire, André, F-22300 Lannion (FR); Vetterli, Martin, New York NY 10027 (US)
(74) Mandataire: Fort, Jacques

(56) Documents cités:
- EP-A- 0 091 014
- DE-A- 3 431 141
- FREQUENZ, vol. 39, no. 7/8, juillet/août 1985, pages 209-215, Berlin, DE; W. KELLERMANN: "Kompensation akustischer Echos in Frequenzteilbändern"
- ICASSP '87 - THE PROCEEDINGS OF THE INTERNATIONAL CONFERENCE ON ACOUSTICS, SPEECH AND SIGNAL PROCESSING, Dallas, avril 1987, pages 2141-2144, IEEE, New York, US; A. GILLOIRE: "Experiments with sub-band acoustic echo cancellers for teleconferencing"

## Description

La présente invention concerne les dispositifs annuleurs d'écho destinés à être utilisés dans les installations de transmission de signaux permettant la transmission à double sens, fréquemment désignée par le terme anglo-saxon "full duplex". Elle trouve une application particulièrement importante en téléphonie pour résoudre des problèmes que posent les installations de téléconférence et les postes téléphoniques dits "mains libres", ou du moins à écoute amplifée. Ces problèmes sont constitués par le risque d'effet Larsen et l'existence d'un écho d'origine acoustique.

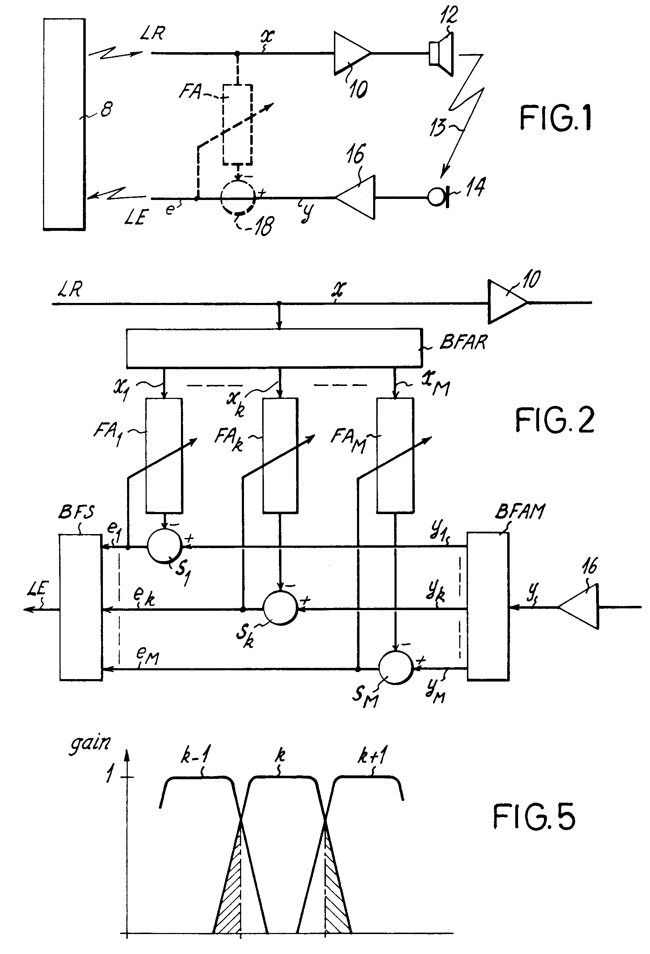

L'origine de ces phénomènes apparaît sur la figure 1 qui montre, en trait plein, le schéma de principe d'un terminal de téléconférence. Les signaux x entrant par une ligne de réception LR et provenant d'un terminal éloigné 8 sont amplifiés par un amplificateur 10 et diffusés dans une salle d'écoute par un haut-parleur 12. Dans la salle d'écoute les ondes sonores provenant d'une part d'un locuteur dont les paroles sont à transmettre, d'autre part du haut-parleur 12 par couplage acoustique (schématisé par un canal 13) sont captées par un microphone 14 ou plusieurs. Le microphone 14 est relié à un amplificateur 16 et le signal de sortie y de ce dernier est émis sur la ligne d'émission LE vers le terminal éloigné. Un auditeur-locuteur placé au terminal éloigné 8 entendra en conséquence non seulement les paroles qui lui sont destinées, mais aussi un écho de sa propre parole avec un retard proportionnel à la longeuer des lignes LE et LR, déformé par la fonction de transfert du canal acoustique 13. Cet écho est d'autant plus gênant que son niveau est élevé et que son retard est grand. Dans une transmission par satellite le retard peut atteindre 600 ms et gêner considérablement l'intelligibilité. L'effet Larsen intervient lorsque le couplage constitué par le canal 13 est suffisamment élevé pour que le gain dans la boucle constituée des deux terminaux et des lignes dépasse 1.

Divers dispositifs sont déjà utilisés pour combattre l'écho acoustique et l'effet Larsen, notamment les variateurs automatiques du gain d'amplification ou les dispositifs d'annulation d'écho dans chaque terminal ou poste "main libre".

Les dispositifs variateurs de gain agissent en introduisant une atténuation avant le haut-parleur ou après le microphone, suivant le sens de communication détectée. Ces dispositifs ont l'inconvénient de produire une impression subjective de coupure de la parole lorsque l'atténuation insérée est forte. Or une atténuation élévée est nécessaire dans les installations de communication où le retard est important et où l'écho doit être fortement atténué pour rester tolérable.

L'invention concerne les dispositifs d'annulation d'écho, destinés à combattre directement l'écho en le compensant par un signal équivalent et de sens contraire. Pour cela, un dispositif annuleur d'écho comprend un dispositif de filtrage adaptatif relié à la ligne d'arrivée de signal entrant et destiné à fournir une estimation de l'écho de ce signal entrant sur l'entrée soustractive d'un soustracteur qui reçoit sur son entrée additive le signal utile affecté de l'écho.

Le principe d'un tel dispositif est indiqué en tirets sur la figure 1. L'annuleur d'écho comporte un dispositif de filtrage adaptatif FA qui reçoit le signal entrant x et dont la sortie attaque l'entrée soustractive d'un soustracteur 18 dont l'entrée additive est reliée à la sortie de l'amplificateur 16. Les coefficients du filtre FA sont adaptés automatiquement en fonction du signal e émis en ligne, égal à la différence entre le signal y affecté d'écho de l'amplificateur 16 et l'écho estimé. L'algorithme d'adaptation des coefficients du filtre FA doit être tel que le filtre reproduit les caractéristiques du canal acoustique de couplage 13, constituées par le début de la réponse impulsionnelle de ce canal.

En l'absence de parole prononcée par un locuteur placé dans la salle, le signal sortant émis sur la ligne LE se réduit alors à un résidu d'écho. Lorsqu'un locuteur parle dans la salle devant le microphone 14, sa parole est transmise à la ligne LE sans être atténuée ni modifiée. Souvent, un dispositif (non représenté) est prévu pour détecter la présence d'un signal de parole provenant d'un locuteur (par exemple par détection de niveau) et pour bloquer alors momentanément l'adaptation du filtre FA pour éviter toute perturbation du filtre par les paroles du locuteur local.

Cette solution a le gros avantage, sur la variation de gain automatique, de permettre le fonctionnement bidirectionnel sans atténuation des signaux utiles, mais les dispositifs actuellement existants qui l'appliquent ne sont pas entièrement satisfaisants, car leur réalisation se heurte à deux difficultés principales.
- Dans le cas des installations téléphoniques, les annuleurs d'écho acoustique comportent des filtres numériques adaptatifs transverses fonctionnant à une fréquence d'échantillonnage de 8 à 16 kHz. Or la réponse impulsionnelle du canal 13 est souvent très longue et elle correspond à plusieurs milliers de coefficients à cette fréquence d'échantillonnage. Les calculs à effectuer à chaque instant d'échantillonnage (filtrage par convolution et adaptation des coefficients du filtre) nécessitent un énorme volume d'opérations. Pour les effectuer très rapidement, des circuits électroniques nombreux et coûteux sont indispensables.
- Les caractéristiques du canal acoustique de couplage 13 varient au cours du temps, par exemple lorsqu'une personne se déplace dans la salle d'écoute. Des raisons théoriques, liées au spectre du signal reçu sur la ligne LR et à la longueur requise du filtre adaptatif, limitent la capacité de poursuite de ces variations (qui devraient être prises en compte immédiatement pour éviter la réapparition intempestive de l'écho) et la vitesse de convergence initiale.

On a proposé, pour résoudre ces problèmes, un dispositif annuleur d'écho, interposé entre la ligne de réception du signal entrant et la ligne d'émission du signal sortant pour annuler l'écho, du type comprenant plusieurs voies de traitement en parallèle affectées à des sous-bandes adjacentes successives de la bande spectrale du signal sortant, chaque voie ayant :
- un premier filtre passe-bande d'analyse recevant le signal à émettre, affecté d'écho, dont la sortie est reliée à l'entrée additive d'un soustracteur ;
- un second filtre passe-bande d'analyse, identique au premier filtre, recevant le signal entrant et alimentant un filtre adaptatif destiné à fournir une valeur estimée d'écho dans la sous-bande à l'entrée soustractive du soustracteur ; et
- un filtre de synthèse, symétrique des filtres d'analyse et dont la sortie alimente la ligne d'émission.

Un dispositif de ce type es décrit par exemple dans l'article "Kompensation akustischer Echos in Frequenzteilbänden, Walter Kellermann, Frequenz, vol. 39 (1985) n° 7-8, pages 209-215. Le schéma de principe d'un tel dispositif est montré en figure 2. Le signal x provenant de la ligne LR est découpé par un banc de M filtres d'analyse BFAR en M sous-bandes de fréquence, habituellement ayant toutes la même largeur. Le signal amplifié y provenant du microphone est découpé en M sous-bandes 1, ..., k, ..., M par un banc de filtres d'analyse BFAM identique au banc BFAR. Dans chaque sous-bande d'ordre k, un filtre adaptatif FAₖ est alimenté par le signal entrant xₖ, et sa sortie est retranchée par le soustracteur Sₖ du signal yₖ provenant du banc d'analyse BFAM. Comme dans l'annuleur classique de la figure 1, le filtre adaptatif FAₖ est ajusté de façon à minimiser la puissance du signal eₖ à la sortie du soustracteur Sₖ.

L'adaptation des coefficients, schématisée sur la figure 2 par une flèche oblique, est effectuée par un circuit particulier utilisant un algorithme classique qui sera généralement l'algorithme du gradient bien que l'on puisse dans certains cas adopter un algorithme plus simple, par exemple l'algorithme du signe, ou un autre algorithme d'adaptation, par exemple l'algorithme des moindres carrés.

Les M signaux e₁, ..., eₖ, ..., e_{M}, alimentent un banc de filtres de synthèse BFS qui reconstitue le signal pleine bande, envoyé en tant que signal sortant sur la ligne d'émission LE.

Ce dispositif présente plusieurs avantages par rapport à un dispositif annuleur d'écho classique, dont la bande n'est pas fractionnée.
- Le volume des calculs a effectuer par unité de temps est considérablement réduit car on peut sous-échantillonner les signaux dans chaque sous-bande ; si Fe est la fréquence d'échantillonnage jugée nécessaire pour les signaux à pleine bande, chacune des M sous-bandes de largeur spectrale Fe/2M peut théoriquement être sous-échantillonnée à sa fréquence de décimation critique, Fe/M. Le volume des calculs pour une même durée de réponse impulsionnelle est théoriquement divisée par M, car la charge de calculs dans les bancs de filtres d'analyse et de synthèse est négligeable devant la masse des calculs à effectuer dans les filtres adaptatifs.
- Dans chaque sous-bande k le gain d'adaptation de l'algorithme utilisé peut être optimisé en fonction de la puissance du signal xₖ dans cette bande, ce qui augmente la vitesse de convergence et la capacité de poursuite des variations du canal acoustique.

Mais ces gains théoriques ne se retrouvent pas complètement en pratique. Une étude complète d'un tel dispositif (A. Gilloire, Experiments with sub-band acoustic echo cancellers for teleconferencing, Proc. ICASSP - 87, avril 1987, Dallas, pages 2141-2144) a montré que dans la réalité il n'est pas possible d'adopter la fréquence de décimation critique si les sous-bandes sont directement adjacentes. En effet, le sous-échantillonnage a la fréquence de décimation critique, nécessaire pour réduire au maximum le volume des calculs, ne peut être utilisé sans faire apparaître, aux frontières entre sous-bandes, des repliements de spectre qui ne sont pas annulés par les filtres adaptatifs. Cela conduit soit à utiliser des sous-bandes disjointes (sans recouvrement), mais avec l'inconvénient d'introduire des brèches dans le spectre du signal reconstitué a la sortie des bancs de synthèse BFS (ce qui nuit a la qualité de la parole lorsque le nombre de sous-bandes est élevé), soit à sous-échantillonner les sous-bandes à une fréquence supérieure a la fréquence de décimation critique pour ménager des bandes de garde évitant les repliements, ce qui augmente la vitesse des calculs nécessaire dans les filtres adaptatifs.

La présente invention vise a fournir un dispositif annuleur d'écho répondant mieux que ceux antérieurement connus aux exigences de la pratique, notamment en ce qu'il élimine dans une large mesure le problème des repliements de spectre. Dans ce but, l'invention propose un dispositif du type ci-dessus défini conforme à la partie caractérisante de la revendication 1.

Pratiquement, ce résultat sera généralement obtenu en constituant lesdits moyens par au moins un filtre adaptatif croisé alimenté par la sortie d'au moins une voie adjacente. Si les filtres d'analyse en sous-bande sont suffisamment sélectifs, il sera souvent suffisant de munir la voie d'ordre k de deux filtres croisés utilisant chacun comme entrée les signaux de sortie des voies adjacentes d'ordre k-1 et k+1 (ou d'une seule pour les voies 1 et M). Si au contraire cette sélectivité est insuffisante, ou pourra être amené à affecter plus de deux filtres croisés à chaque voie.

Les filtres croisés pourront souvent être factorisés en une partie fixe, dépendant uniquement des caractéristiques des bancs de filtres d'analyse et de synthèse, et une partie adaptative. L'augmentation du volume des calculs est faible et la réduction globale de ce volume par rapport à l'annuleur classique pleine bande est maintenue dans un rapport qui peut presque atteindre le nombre des sous-bandes.

L'invention sera mieux comprise à la lecture de la description qui suit d'exemples de réalisation, donnés à titre explicatif et nullement limitatif. La description se réfère aux dessins annexés, sur lesquels :
- la figure 1, déjà décrite, est un schéma synoptique d'une installation de téléconférence équipée d'un dispositif annuleur d'écho classique, représenté en tirets ;
- la figure 2, déjà décrite, est un schéma synoptique d'un dispositif annuleur d'écho en sous-bandes de fréquences ;
- la figure 3 représente le schéma général d'un dispositif constituant un exemple de mise en oeuvre de l'invention, une seule voie étant représentée de façon complète ;
- la figure 4 illustre une variante de l'invention, dans laquelle seuls les filtres croisés provenant des bandes directement adjacentes à une voie donnée sont conservés ;
- la figure 5 montre une forme possible des sous-bandes dans le cas de la variante décrite figure 4;
- la figure 6 illustre une réalisation de l'invention, dans laquelle les filtres croisés sont factorisés en une partie fixe et une partie adaptative.

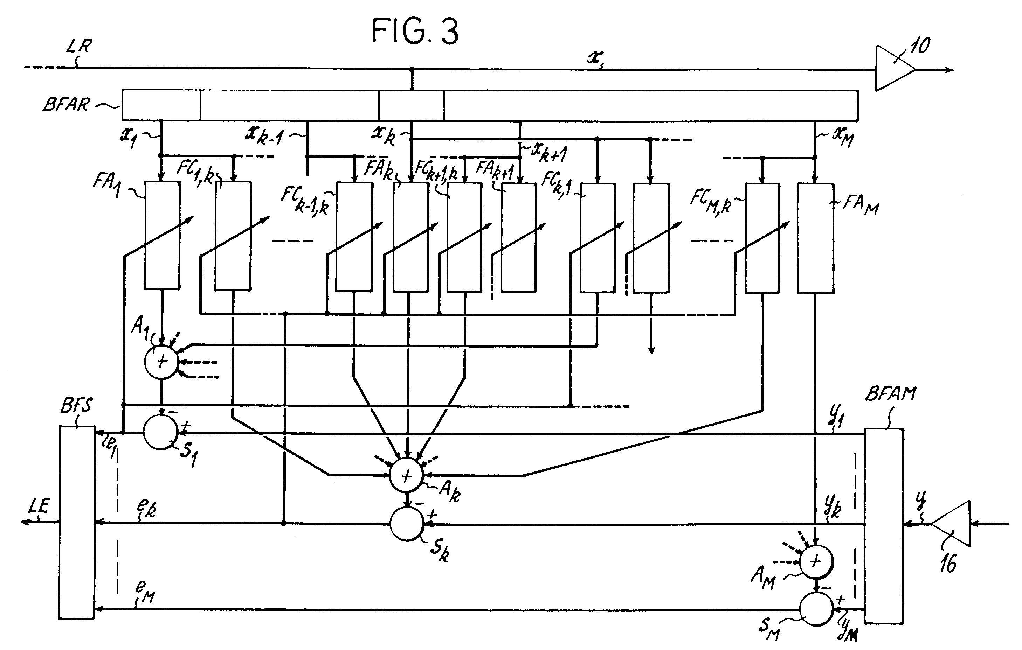

Le dispositif montré schématiquement sur la figure 3, où les organes correspondant à ceux de la figure 2 sont désignés par la même référence, comprend encore un banc BFAM de M filtres d'analyse recevant le signal de sortie y de l'amplificateur 16, affecté d'écho, et un banc BFAR d'analyse du signal entrant x arrivant par la ligne de réception LR. Les deux bancs de filtres sont identiques. La sortie yₖ de BFAM attaque l'entrée additive d'un soustracteur Sₖ qui fournit en sortie le signal eₖ appliqué aux filtres correspondants du banc de filtres de synthèse BFS alimentant la ligne d'émission LE. Les signaux dans chaque sous-bande sont décimés (sous-échantillonnés) dans le rapport M à l'intérieur des bancs d'analyse BFAM et BFAR.

La sortie du filtre FAₖ n'est cette fois pas appliquée directement à l'entrée soustractive du soustracteur Sₖ. Elle est tout d'abord additionnée à la sortie de filtres croisés FC_{1,k}, ..., FC_{k-1,k}, FC_{k+1,k}, ..., FC_{M,k}. Le dispositif comporte en conséquence, pour chaque voie k, un additionneur Aₖ recevant la sortie du filtre FAₖ correspondant et celle des filtres croisés associés. Les coefficients de tous les filtres croisés contribuant à la formation du signal de sortie de l'additionneur Aₖ sont ajustés par des circuits dont le signal d'entrée est constitué par la sortie eₖ du soutracteur eₖ. Pour les filtres croisés FC_{2,1}, ..., FC_{k,1}, ..., FC_{M,1} les coefficients seront ajustés en réponse à la composante e₁ du signal sortant, etc...

Le dispositif montré en figure 3 exige que chaque voie comporte, en plus du filtre adaptatif FA, M-1 filtres croisés FC. Mais dans la pratique les bandes de repliement aux frontières basses et hautes d'une sous-bande d'ordre k ne s'étendent souvent pas jusqu'aux sous-bandes extrêmes d'ordre 1 et M, ce qui permet de réduire le nombre des filtres croisés. Cette réduction peut être d'autant plus importante que les filtres des bancs BFAR et BFAM sont sélectifs. Si on utilise des filtres dits miroirs en quadrature (souvent désignés par l'abréviation anglo-saxonne QMF) ou des filtres pseudo-QMF, on pourra souvent limiter les bandes de repliement correspondant à un canal à un domaine qui ne déborde pas au delà des deux canaux adjacents. La figure 5 montre, à titre d'exemple, la variation de gain en fonction de la fréquence que permettent d'obtenir des filtres QMF : le gain devient pratiquement nul, pour le filtre d'ordre k du banc, bien avant la fréquence centrale des sous-bandes adjacentes. Les filtres QMF et pseudo-QMF ont en effet la propriété d'assurer un gain de 3 dB à la fréquence de coupure et une réponse globale du banc de filtres plate, c'est-à-dire sans modification du spectre de fréquences.

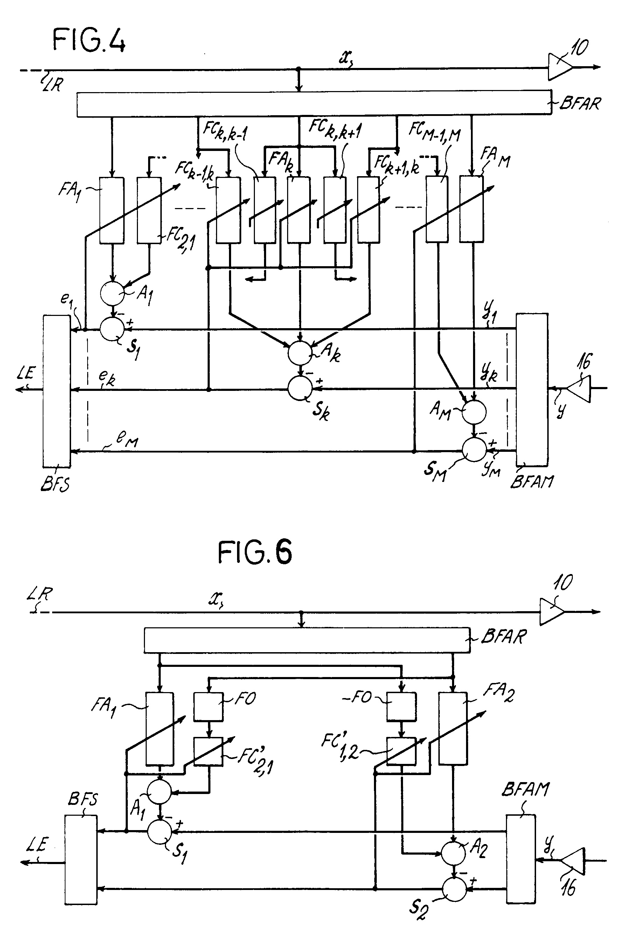

Dans ce cas, le dispositif peut être très simplifié. Comme indiqué sur la figure 4, il suffit de prévoir deux filtres croisés FC_{k-1,k} et FC_{k+1,k} pour la voie k (et même un seul, FC2, 1 ou FC_{M-1,M}, pour les voies extrêmes 1 ou M). On voit sur la figure 4 que la sortie du filtre correspondant à la sous-bande d'ordre k du banc d'analyse BFAR alimente l'entrée du filtre adaptatif principal FAₖ et les entrées de deux filtres croisés seulement FC_{k,k-1} et FC_{k,k+1}. L'additionneur Aₖ à trois entrées reçoit la sortie du filtre principal FAₖ et les sorties des filtres croisés FC_{k-1,k} et FC_{k+1,k} ; la sortie de Aₖ est soustraite du signal de la sous-bande k provenant du banc de filtres BFAM par le sous-tracteur Sₖ.

Les filtres adaptatifs FA et les filtres croisés FC peuvent avoir l'une quelconque de nombreuses constitutions connues. On peut notamment utiliser les filtres mettant en oeuvre l'algorithme du gradient fréquemment utilisés dans les filtres adaptatifs transverses. Un filtre mettant en oeuvre l'algorithm de recherche des moindres carrés donne des résultats encore améliorés, au prix d'une plus grande complexité de calcul. Dans certains cas encore, il suffit d'utiliser l'algorithme du signe. Pour une description de ces filtres, de leur fonctionnement et leurs avantages respectifs, on pourra se reporter à divers documents par exemple à l'article de O. MACCHI et autres "Le point sur le filtrage adaptatif transverse", 11e colloque GRETSI, Nice, juin 1987, pages 1G-14G et au brevet US 4 564 934 (MACCHI).

Une solution avantageuse consiste à adopter, pour les filtres croisés, une structure particulière, montrée en figure 6 dans le cas particulier d'un découpage en deux sous-bandes. Chacun des filtres croisés est factorisé en une partie fixe FO et une partie adaptative FC′. La partie FO est égale au produit de convolution des deux filtres constituant chaque banc d'analyse décimé dans un rapport 2. Dans ce cas de deux sous-bandes, les filtres des bancs BFAR et BFAM sont l'un un filtre passe-bas, l'autre un filtre passe-haut.

La même constitution des filtres croisés pourrait être transposée aux modes de réalisation de la figure 3 et de la figure 4.

Le fractionnement en sous-bandes s'effectuera dans chaque cas en tenant compte des caractéristiques de l'installation de transmission.

La solution la plus simple, utilisable en téléphonie, consiste à utiliser deux sous-bandes allant respectivement de 0 à 4.000 Hz et de 4.000 à 8.000 Hz. Une solution un peu plus complexe, utilisant encore des sous-bandes de largeurs égales, consiste à fractionner la bande totale en quatre sous-bandes de 2.000 Hz chacune ou en huit sous-bandes de 1.000 Hz chacune.

Dans certains cas cependant, il sera avantageux d'utiliser des sous-bandes de largeur inégale. Mais dans ce cas les termes de correction doivent être adaptés à la fréquence correcte d'échantillonnage pour chaque sous-bande.

Dans chaque cas, le nombre de filtres croisés utilisé pour chaque sous-bande est choisi en fonction du nombre de sous-bandes pour lesquelles se produit un recouvrement. Dans le cas par exemple d'une structure à huit sous-bandes égales de 1.000 Hz de large, les débordements d'une sous-bande aux bandes adjacentes ne doivent pas dépasser 1.000 Hz. Ce résultat peut être aisément obtenu à l'aide de bancs de filtres efficaces dont la complexité reste cependant limitée, par exemple à 64 ou 96 coefficients.

On donnera maintenant, à titre d'exemple, les caractéristiques que l'on peut donner à un dispositif représentatif, pour une cadence d'échantillonnage de 16 kHz, requise pour la transmission de la parole sur une bande large (jusqu'à 7 kHz). Pour réaliser un dispositif fonctionnant à 16 kHz et destiné à identifier les 62 premières millisecondes de la réponse impulsionnelle du canal acoustique de couplage 13, une disposition conforme au schéma de la figure 6 est utilisée. Chaque sous-bande est sous-échantillonnée à 8.000 Hz. Chaque filtre principal FA1 ou FA2 a une longueur de 500 coefficients. Chaque filtre croisé a une partie fixe FO de longueur 32 (pour des bancs de filtres construits à partir d'un prototype passe-bas de 32 coefficients) et une partie adaptative FC′ de 160 coefficients, soit environ le tiers de la longueur des filtres principaux, ce qui est suffisant en pratique.

Les filtres adaptatifs sont tous ajustés au moyens d'un algorithme de gradient stochastique, l'adaptation représentant dans ce cas autant de calculs que la convolution. Le volume de calculs à effectuer pour chaque paire d'échantillons d'entrée est alors :
2*(2*500 + 2*160) + 2*32 + 3*32 = 2 800 multiplications-accumulations.

Ce chiffre est à comparer aux 4.000 multiplications-accumulations que doit réaliser un annuleur classique pour traiter une paire d'échantillons.

Dans une seconde application qui est également représentative, où le dispositif doit encore fonctionner à la fréquence d'échantillonnage de 16 kHz mais doit identifier les 125 premières millisecondes de la réponse impulsionnelle du canal acoustique de couplage, on utilise un dispositif du genre décrit en figure 3. Le dispositif comporte M = 8 sous-bandes. Chaque sous-bande est sous-échantillonnée à 2.000 Hz. Chaque filtre principal FA a une longueur de 250 coefficients et chaque filtre croisé FC a une partie fixe de 12 coefficients et une partie adaptative de 84 coefficients. Les bancs de filtres d'analyse et de synthèse sont construits à partir d'un prototype passe-bas de 96 coefficients. La bande correspondant aux fréquences les plus élevées (7 000 à 8 000 Hz) n'est pas traitée, car elle contient des signaux de puissance négligeable. Il s'agit de la bande de transition des filtres d'entrée antirepliement, non représentés sur les figures.

Le volume de calculs à réaliser pour chaque bloc de 8 échantillons est alors :
2*(7*250 + 12*84) + 7*12 + 3*(96+56) = 5 856 multiplications-accumulations,
Ce chiffre est à comparer aux 32 000 multiplications-accumulations que doit effectuer un annuleur classique pour traiter le même bloc de 8 échantillons.

L'invention ne se limite pas aux modes particuliers de réalisation qui ont été représentés et décrits; ces applications ne se limitent pas à la téléphonie et aux échos acoustiques. Le dispositif annuleur d'écho peut être également utilisé pour des installations de transmission de données pour y annuler les échos électriques en ligne.

## Revendications

1. Dispositif annuleur d'écho comprenant un dispositif de filtrage adaptatif interposé entre la ligne (LR) de réception de signal entrant et la ligne (LE) j'émission de signal sortant, destiné à fournir une estimation de l'écho, comprenant plusieurs voies de traitement en parallèle affectées à des sous-bandes adjacentes successives de la bande spectrale du signal sortant, chaque voie ayant :
- un premier filtre passe-bande d'analyse (BFAM) recevant le signal à émettre affecté d'écho, dont la sortie décimée est reliée à l'entrée additive d'un soustracteur (Sₖ);
- un second filtre passe-bande d'analyse (BFAR), identique au premier, recevant le signal entrant (x) et alimentant un filtre adaptatif (FAₖ) destiné à fournir une valeur estimée d'écho dans la sous-bande à l'entrée soustractive du soustracteur ; et
- un filtre de synthèse (BFS), symétrique des filtres d'analyse et dont la sortie alimente la ligne d'émission (LE),
caractérisé en ce que chaque voie de traitement est munie de moyens (FC) synthétisant, pour la sous-bande correspondante par filtrage adaptatif de signal dans au moins une autre sous-bande, la composante de repliement provenant de cette autre sous-bande et éliminant ladite composante en l'ajoutant au signal provenant du filtre d'analyse (BFAR) du signal entrant correspondant.

2. Dispositif selon la revendication 1, caractérisé en ce que lesdits moyens sont constitués par au moins un filtre adaptatif croisé (FC_{k-1, k}; FC_{k+1,k}), alimente par la sortie d'au moins une voie adjacente.

3. Dispositif selon la revendication 2, caractérisé en ce que chaque voie (k), sauf les voies extrêmes, utilise comme entrées les signaux de sortie des bandes adjacentes (k-1, k+1) et d'elles seules.

4. Dispositif selon la revendication 3, caractérisé en ce que les filtres d'analyse en sous-bande sont des filtres QMF ou pseudo-QMF.

5. Dispositif selon la revendication 2, 3 ou 4, caractérisé en ce que chaque filtre croisé est factorisé en une partie fixe, dépendant uniquement des caractéristiques des bancs de filtres d'analyse et de synthèse, et une partie adaptative.

6. Dispositif selon l'une quelconque des revendications précédentes, caractérisé en ce que les sous-bandes sont de largeur égale.

7. Dispositif selon l'une quelconque des revendication 2 à 5, caractérisé en ce que les filtres croisés sont ajustés par un algorithme qui, pour tous les filtres contribuant à fournir l'estimation pour une voie donnée, utilise comme paramètre d'entrée la sortie du soustracteur placé sur cette voie.

8. Dispositif selon l'une quelconque des revendications précédentes, caractérisé en ce que l'algorithme d'adaptation de tous les filtres est l'algorithme du gradient.

9. Dispositif selon l'une quelconque des revendications 1 à 7, caractérisé en ce que l'algorithme d'adaptation de certains au moins des filtres appertient à la famille des algorithmes de recherche des moindres carrés.

## Claims

1. An echo cancelling device comprising an adaptive filtering device located between the line (LR) receiving an incoming signal and the line (LE) transmitting an outgoing signal, for providing an estimation of the echo, comprising a plurality of processing channels connected in parallel relation and assigned to successive mutually adjacent sub-bands of the spectral band of the outgoing signal, each channel having :
- a first analysis band-pass filter (BFAM) receiving the echo-affected signal to be transmitted, whose output is connected to the additive input of a subtractor (Sₖ);
- a second analysis band-pass filter (BFAR), identical to the first filter, receiving the incoming signal and feeding an adaptive filter (FAₖ) for delivering an estimated echo value in the sub-band to the subtractive input of the subtractor ; and
- a synthesis filter (BFS), symmetrical with the analysis filters and whose output feeds the transmission line (LE),
characterized in that each processing channel is provided with means (FC) for synthetising, for the respective sub-band, by adaptive filtering of the signal in at least another sub-band, the aliasing component orginating from that sub-band and for eliminating said component by adding it to the signal originating from the filter (BFAR) analysing the respective incoming signal.

2. Device according to claim 1,
characterized in that said means comprise at least one adaptive cross-filter (FC_{k-1, k}; FC_{k, k+1}) fed by the output of at least one adjacent channel.

3. Device according to claim 2,
characterized in that each channel (k), except the extreme channels, receive, on inputs thereof, the output signals from only the two adjacent sub-bands (k-1, k+1).

4. Device according to claim 3,
characterized in that the analysis band pass filters are QMF or pseudo-QMF filters.

5. Device according to claim 2,
characterized in that each cross-filter is factorized into a fixed part, depending solely on the characteristics of the analysis and synthesis filter banks, and an adaptive part.

6. Device according to any one of the preceding claims,
characterized in that sub-bands are of equal width.

7. Device according to any one of claims 2 to 5,
characterized in that the cross-filters contributing to provide an estimation for a same channel are adjusted by an algorithm which uses the output of the subtractor on the same channel as input parameter.

8. Device according to any one of the preceding claims,
characterized in that the algorithm for adapting all filters is the gradient algorithm.

9. Device according to any one of the preceding claims,
characterized in that the adaptation algorithm of some at least of said filters belongs to the family of the least square algorithms.

## Patentansprüche

1. Echounterdrückungsvorrichtung, umfassend eine zwischen der Empfangsleitung (LR) für das Eingangssignal und der Emissionsleitung (LE) für das Ausgangssignal angeordnete adaptive Filterungsvorrichtung, welche dazu bestimmt ist, eine Schätzung des Echos zu liefern, umfassend mehrere parallele Verarbeitungskanäle, welche aufeinanderfolgenden, benachbarten Unterbändern des Ausgangssignalspektralbands zugeordnet sind, wobei jeder Kanal aufweist:
- ein erstes Analysebandpaßfilter (BFAM), welches das vom Echo betroffene, zu emittierende Signal aufnimmt und dessen dezimierter Ausgang mit dem additiven Eingang eines Substrahierers (Sₖ) verbunden ist;
- ein zweites, dem ersten identisches Analysebandpaßfilter (BFAR), welches das Eingangssignal (x) aufnimmt und in ein adaptives Filter (FAₖ) mündet, das dazu bestimmt ist, dem subtraktiven Eingang des Substrahierers einen Schätzwert des Echos in dem Unterband zu liefern; und
- ein zu den Analysefiltern symmetrisches Synthesefilter, dessen Ausgang in die Emissionsleitung (LE) mündet,
dadurch gekennzeichnet, daß
jeder Bearbeitungskanal mit Mitteln (FC) ausgestattet ist, welche für das entsprechende Unterband durch adaptive Filterung des Signals in wenigstens einem anderen Unterband die von diesem anderen Unterband herrührende Zurückfaltungskomponente synthetisieren und besagte Komponente eliminieren, indem sie dem von dem entsprechenden Analysefilter (BFAR) des Eingangssignals kommenden Signal hinzugefügt wird.

2. Vorrichtung nach Anspruch 1, dadurch gekennzeichnet, daß die Mittel von wenigstens einem gekreuzten, adaptiven Filter (FC_{k-1,k}; FC_{k+1,k}) gebildet sind, in welches der Ausgang von wenigstens einem benachbarten Kanal mündet.

3. Vorrichtung nach Anspruch 2, dadurch gekennzeichnet, daß, von den äußersten Kanälen abgesehen, jeder Kanal (k) als Eingänge die Ausgangssignale der benachbarten Bänder (k-1, k+1), und nur diese, verwendet.

4. Vorrichtung nach Anspruch 3, dadurch gekennzeichnet, daß die Unterbandanalysefilter QMF-Filter oder Pseudo-QMF-Filter sind.

5. Vorrichtung nach Anspruch 2, 3 oder 4, dadurch gekennzeichnet, daß jedes gekreuzte Filter in einen festen Teil, welcher einzig von den Eigenschaften der Analyse- und Synthesefilteranordnungen abhängt, und einen adaptiven Teil faktorisiert ist.

6. Vorrichtung nach einem der vorhergehenden Ansprüche, dadurch gekennzeichnet, daß die Unterbänder gleiche Breite aufweisen.

7. Vorrichtung nach einem der Ansprüche 2 bis 5, dadurch gekennzeichnet, daß die gekreuzten Filter durch einen Algorithmus angepaßt werden, welcher für alle Filter, die dazu beitragen, den Schätzwert für einen gegebenen Kanal zu liefern, als Eingangsparameter das Ausgangssignal des in diesem Kanal angeordneten Substrahierers verwendet.

8. Vorrichtung nach einem der vorhergehenden Ansprüche, dadurch gekennzeichnet, daß der Anpassungsalgorithmus für alle Filter der Gradientenalgorithmus ist.

9. Vorrichtung nach einem der Ansprüche 1 bis 7, dadurch gekennzeichnet, daß der Anpassungsalgorithmus von wenigstens bestimmten Filtern der Familie der Suchalgorithmen mit Hilfe kleinster Quadrate angehört.
